# EUROPEAN PATENT SPECIFICATION

(11) **EP 1 633 520 B1**
(45) Date of publication and mention of the grant of the patent: **15.09.2010**
(21) Application number: 04732636.8
(22) Date of filing: 13.05.2004
(51) Int. Cl.: B23K 9/16, B23K 9/028

(54) **APPARATUS FOR WELDING CYLINDRICAL ELEMENTS AND TOROIDAL BODIES**
VORRICHTUNG ZUM SCHWEISSEN ZYLINDRISCHER ELEMENTE UND TORISCHER KÖRPER
APPAREIL DE SOUDAGE D'ELEMENTS CYLINDRIQUES ET DE CORPS TORIQUES

(30) Priority: 14.05.2003 FI 20035063
(43) Date of publication of application: 15.03.2006
(73) Proprietor: EFES TEX AG, CH-6901 Lugano (CH)
(72) Inventor: LARIKKA, Leo, FI-01600 Vantaa (FI)
(74) Representative: LEITZINGER OY
(86) International application number: PCT/FI2004/050063
(87) International publication number: WO 2004/101207

(56) References cited:
- WO-A1-99/55486
- WO-A1-03/022502
- CH-A5- 691 671
- DE-U1- 20 114 615
- US-A- 5 310 982

## Description

The invention relates to an apparatus for welding cylindrical elements and toroidal bodies, said apparatus comprising
- a base,
- an electrode adaptor, having a welding electrode attached thereto,
- a fitting member, which is mounted on the base and has the rotatably bearing-mounted electrode adaptor extended therethrough, and
- a shielding gas chamber, which is dismountably mountable on the fitting member, around the electrode,
the shielding gas chamber's accommodation space for elements or bodies to be welded being designed in such a way that the elements or bodies to be welded constitute a section of the walls defining the shielding gas chamber's gas space.

This type of welding apparatus is known from US-A-5,310,982. In this welding apparatus the welding head and the shielding gas chamber are outside the elements to be welded for making an external welding seam. As a further prior art can be referred to the Applicant's published international application WO 99/55486 and the corresponding patent publication US-6,433,307 B1. This prior known combination of a welding apparatus and a shielding gas chamber is described to include a blocked shielding gas chamber, well adapted to welding relatively short pipes. As for welding long pipes, the arrangement is no longer practical.

It is an object of the invention to provide an alternative solution, which is also applicable to the welding of long pipes with an internal welding seam.

This object is accomplished on the basis of characterizing features as set forth in the appended claim 1. Preferred implementations of the invention are disclosed in the dependent claims.

One exemplary embodiment of the invention will now be described in more detail with reference to the accompanying drawing, in which:

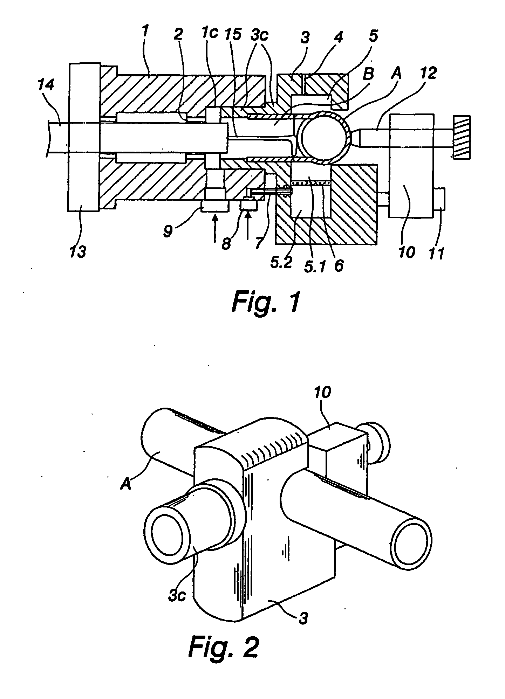

- Fig. 1: shows a welding apparatus of the invention in an axial section, and
- Fig. 2: shows in an axonometric view a shielding gas chamber included in a welding apparatus of the invention.

The apparatus comprises a schematically depicted base 13 and an electrode adaptor 14, reference being made to the cited international application WO 99/55486 and the patent US-6,433,307 regarding its drive mechanism. The electrode adaptor 14 is provided at least with a rotary drive and, in a preferred case, also with a reciprocating axial motion, controlled in a manner dependent on the rotary drive. The base 13 is provided with a fitting member 1, having the electrode adaptor 14 extended therethrough. The electrode adaptor 14 is mounted with bearings 2 dielectrically on the fitting member 1.

The actual welding chamber for welding long pipes, mains and branches of bypass manifolds is constituted by a component 3. The shielding gas chamber 3 is dismountably mountable on the fitting member 1 around an electrode 15. For this purpose, the fitting member 1 is provided with an Inner cylinder 1c concentric with the electrode adaptor 14 and the shielding gas chamber 3 is provided with a protruding cylinder element 3c, sized to provide a push fit with the inner cylinder 1c. The protruding cylinder element 3c is internally sized to accept a branch pipe B to be welded and the shielding gas chamber 3 is provided with a recess, which is complementary to a main pipe A and which is blocked outwards by the main pipe A. The recess diverges or expands within the range between the blocking point and the cylinder element 3c to define a blocking-point surrounding outer chamber 5, 5.1, 5.2 for shielding gas.

The elements A and B are sized or dimensioned, such that the main pipe's A major diameter coincides with the outer chamber's 5, 5.1 inner edge to define a smallest possible clearance. At a junction between the main pipe A and the branch pipe B, i.e. at a weld, the outer chamber 5, 5.1 surrounds the branch pipe B and, at the same time, surrounds the entire weld joint. In its lower part, the outer chamber is divided for two compartments 5.1 and 5.2 by means of an element 6 providing a laminar gas flow.

As the shielding gas chamber's 3 cylinder element 3c is sized to provide a push fit with the fitting member's 1 inner cylinder, the centre axes of elements to be welded will coincide with the extension of the electrode adaptor's 14 centre axis upon pushing the elements 1, 3 within one another, as regards the cylinder portions 1c, 3c thereof. The electrode 15 is secured to the electrode adaptor 14 in a centralized manner and the electrode 15 has its length set at a welding distance from the junction of the elements A and B, resulting in a welding assembly ready for service.

A shielding gas needed in welding is guided inside a body to be welded through a hole 9 and further from the outer end of the branch pipe B to the interior of the branch pipe B. The gas fills the inner chamber space and propels the existing inside air out through the main pipe A.

The shielding gas external of a weld is delivered through a hole 8 along a pipe 7 into the compartment 5.2, from which the gas progresses in a laminar flow into the compartment 5.1 and 5. The air, which is propelled ahead of gas, and the gas, which is used during the process, discharge through a hole 4 and by way of gaps between the pipe A and the element 3.

The pipe 7 and the hole present in the element 3 are sized in such a way that the pipe 7 functions as a guide to set the elements 1 and 3 always in the same relative position.

Retention of the pipe sections A and B, as well as the shielding gas chamber 3 in the same relative position throughout a welding process is secured by means of fastening elements 10, 11 and 12. A screw 12 can be used for damping the elements to a position blocking the shielding gas chamber 3.

What is essential in the invention is that the elements or bodies to be welded constitute a part of the walls defining a shielding gas chamber and at the same time divide the shielding gas chamber for inner and outer compartments. Thus, the shielding gas spaces remain very small, yet the size of elements to be welded and especially the length of the main pipe A are not limited.

The invention is not limited to the above-described exemplary embodiment as the design and sizing of elements can be modified in a variety of ways. For example, the shielding gas chamber 3 may consist of a plurality of sections, the attachment of which to each other is achieved by means of elements to be welded. In this case, at least one chamber section is used to support and align the elements to be welded relative to each other.

## Claims

1. An apparatus for welding cylindrical elements and toroidal bodies, said apparatus comprising
- a base (13),
- an electrode adaptor (14), having a welding electrode (15) attached thereto,
- a fitting member (1), which is mounted on the base (13) and has the rotatably bearing-mounted electrode adaptor (14) extended therethrough, and
- a shielding gas chamber (3), which is dismountably mountable on the fitting member (1), around the electrode (15),
the shielding gas chamber's (3) accommodation space for elements or bodies (A, B) to be welded being designed in such a way that the elements or bodies (A, B) to be welded constitute a section of the walls defining the shielding gas chamber's (3) gas space, **characterized in that** the elements or bodies (A, B) constitute a partition for dividing the shielding gas chamber for two chamber compartments, one of which, an inner chamber, directs the shielding gas to the interior of the elements or bodies to be welded and the other, an outer chamber (5, 5.1, 5.2), surrounds the eventual weld, and **in that** the fitting member (1) is provided with an inner cylinder (1c) concentric with the electrode adaptor (14) and the shielding gas chamber (3) is provided with a protruding cylinder element (3c) sized to provide a push fit with the inner cylinder (1c), and **in that** the protruding cylinder element (3c) is internally sized to accept a branch pipe (B) to be welded and the shielding gas chamber is provided with a recess, which is complementary to a main pipe (A)

2. An apparatus as set forth in claim 1, **characterized in that** the recess is blocked outwards by the main pipe (A), and the recess diverges within the range between said blocking point and the cylinder element (3c) to define said outer chamber (5, 5.1, 5.2).

3. An apparatus as set forth in any of claims 1 or 2, **characterized in that** between the fitting member (1) and the shielding gas chamber (3) is a shielding gas pipe (7), which connects to the outer chamber (5, 5.1, 5.2) and which functions as a guide to set the fitting member (1) and the shielding gas chamber (3) always in the same relative position.

4. An apparatus as set forth in any of claims 1-3, **characterized in that** the shielding gas chamber (3) is provided with fastening means (10-12) for securing the elements or bodies (A, B) to be welded in a position blocking the shielding gas chamber (3).

## Patentansprüche

1. Vorrichtung zum Schweißen zylindrischer Elemente und torischer Körper, die Vorrichtung umfassend
- eine Basis (13),
- einen Elektrodenschaft (14) mit einer daran angebrachten Schweißelektrode (15),
- ein Passglied (1), das an der Basis (13) angebracht ist und durch das der drehbar gelagerte Elektrodenschaft (14) verläuft, und
- eine Schutzgaskammer (3), die abnehmbar an dem Passglied (1) um die Elektrode (15) anbringbar ist,
wobei der Unterbringungsplatz der Schutzgaskammer (3) für Elemente oder Körper (A, B), die geschweißt werden sollen, derart ausgelegt ist, dass die Elemente oder Körper (A, B), die geschweißt werden sollen, einen Teilabschnitt der Wände bilden, die den Gasraum der Schutzgaskammer (3) definieren, **dadurch gekennzeichnet, dass** die Elemente oder Körper (A, B) eine Trennung zum Unterteilen der Schutzgaskammer in zwei Kammerabteilungen bilden, von denen eine, eine Innenkammer, das Schutzgas in das Innere der Elemente oder Körper, die geschweißt werden sollen, leitet, und die andere, eine Außenkammer (5, 5.1, 5.2), die letztendliche Schweißstelle umgibt, und dass das Passglied (1) mit einem Innenzylinder (1c) versehen ist, der mit dem Elektrodenschaft (14) konzentrisch ist, und die Schutzgaskammer (3) mit einem vorstehenden Zylinderelement (3c) versehen ist, das zum Vorsehen einer Schiebepassung mit dem Innenzylinder (1c) bemessen ist, und dass das vorstehende Zylinderelement (3c) innen zum Annehmen eines Zweigrohrs (B), das geschweißt werden soll, bemessen ist und die Schutzgaskammer mit einer Aussparung versehen ist, die zu einem Hauptrohr (A) ergänzend ist.

2. Vorrichtung nach Anspruch 1, **dadurch gekennzeichnet, dass** die Aussparung nach außen durch das Hauptrohr (A) blockiert ist und die Aussparung innerhalb des Bereichs zwischen dem Blockierungspunkt und dem Zylinderelement (3c) zum Definieren der Außenkammer (5, 5.1, 5.2) divergiert.

3. Vorrichtung nach einem der Ansprüche 1 oder 2, **dadurch gekennzeichnet, dass** sich zwischen dem Passglied (1) und der Schutzgaskammer (3) ein Schutzgasrohr (7) befindet, das die Außenkammer (5, 5.1, 5.2) anschließt und als Führung zum Einstellen des Passglieds (1) und der Schutzgaskammer (3) stets in derselben relativen Position wirkt.

4. Vorrichtung nach einem der Ansprüche 1 bis 3, **dadurch gekennzeichnet, dass** die Schutzgaskammer (3) mit Befestigungsmitteln (10 bis 12) zum Festhalten der Elemente oder Körper (A, B), die geschweißt werden sollen, in einer Position versehen ist, die die Schutzgaskammer (3) blockiert.

## Revendications

1. Appareil de soudage d'éléments cylindriques et de corps toriques, ledit appareil comprenant
- une base (13),
- un adaptateur d'électrode (14) présentant une électrode de soudage (15) fixée sur celui-ci,
- un élément d'insertion (1) monté sur la base (13) et ayant l'adaptateur d'électrode (14), monté de manière rotative sur palier, étendu dans son intérieur, et
- une chambre de gaz protecteur (3) montée de manière à être démontable sur l'élément d'insertion (1), autour de l'électrode (15),
l'espace d'accueil de la chambre de gaz protecteur (3) pour les éléments ou les corps (A, B) à souder étant conçu de telle manière que les éléments ou les corps (A, B) à souder constituent une section des parois définissant l'espace de gaz de la chambre de gaz protecteur (3), **caractérisé en ce que** les éléments ou les corps (A, B) constituent une cloison pour diviser la chambre de gaz protecteur (3) en deux compartiments de chambre, l'un deux, une chambre intérieure dirige le gaz protecteur vers l'intérieur des éléments ou des corps (A, B) et l'autre, une chambre extérieure (5, 5.1, 5.2) entoure la soudure éventuelle, et **en ce que** l'élément d'insertion (1) est muni d'un cylindre intérieur (1c) concentrique avec l'adaptateur d'électrode (14) et la chambre de gaz protecteur (3) est munie d'un élément de cylindre en saillie (3c) dimensionné pour fournir une insertion par poussée avec le cylindre intérieur (1c), et **en ce que** l'élément de cylindre en saillie (3c) est dimensionné intérieurement pour recevoir un tube de branchement (B) à souder et la chambre de gaz protecteur (3) est munie d'un évidement complémentaire d'un tube principal (A).

2. Appareil selon la revendication 1, **caractérisé en ce que** l'évidement est bloqué vers l'extérieur par le tube principal (A) et l'évidement bifurque à l'intérieur de la plage entre ledit point de blocage et l'élément de cylindre (3c) pour définir ladite chambre extérieure (5, 5.1, 5.2).

3. Appareil selon la revendication 1 ou 2, **caractérisé en ce qu'**entre l'élément d'insertion (1) et la chambre de gaz protecteur (3), un tube de gaz protecteur (7) est prévue, laquelle se raccorde à la chambre extérieure (5, 5.1, 5.2) et sert de guide pour régler l'élément d'insertion (1) et la chambre de gaz protecteur (3) toujours dans la même position relative.

4. Appareil selon l'une des revendications 1 à 3, **caractérisé en ce que** la chambre de gaz protecteur (3) est munie de moyens de fixation (10-12) pour fixer les éléments ou les corps (A, B) à souder dans une position bloquant la chambre de gaz protecteur (3).
